# EUROPÄISCHE PATENTSCHRIFT

(11) **EP 2 580 490 B1**
(45) Veröffentlichungstag und Bekanntmachung des Hinweises auf die Patenterteilung: **18.10.2017**
(21) Anmeldenummer: 11729904.0
(22) Anmeldetag: 09.06.2011
(51) Int. Cl.: F16G 11/00, F16G 11/14, B63B 21/08

(54) **SEILENDVERBINDUNG**
ROPE END CONNECTION
ATTACHE D'EXTRÉMITÉ DE CORDE

(30) Priorität: 14.06.2010 DE 102010023617
(43) Veröffentlichungstag der Anmeldung: 17.04.2013
(73) Patentinhaber: Schröder, Tim, 22113 Hamburg (DE)
(72) Erfinder: Schröder, Tim, 22113 Hamburg (DE)
(74) Vertreter: Groth, Wieland
(86) Internationale Anmeldenummer: PCT/EP2011/002837
(87) Internationale Veröffentlichungsnummer: WO 2011/157379

(56) Entgegenhaltungen:
- US-A- 1 461 498
- US-A- 1 807 314

## Beschreibung

Die Erfindung betrifft ein Verbindungsmittel für ein längliches biegeschlaffes Element.

Unter Seilendverbindungen werden hier Einrichtungen verstanden, an denen ein Seilendabschnitt eines Seils verknotet werden kann.

Aus der US 4,661,077 ist eine Rettungseinrichtung gemäß dem Oberbegriff des Anspruchs 1 bekannt mit einer in der Länge veränderbaren Schlaufe und einem kreisrunden Befestigungsstück mit zwei parallelen Seildurchführungen. Ein Seil wird unter Ausbildung der Schlaufe durch beide Seildurchführungen hindurch geführt und außerhalb der zweiten Seildurchführung mit einem Knoten gesichert.

In der DE 410 5 667 A1 ist eine lasteinstellbare, brechbare Sicherheitseinrichtung offenbart. Je nach Wahl eines Sicherheitspunktes, der in Form eines Loches in der Einrichtung ausgebildet ist, werden zwischen zwei der Sicherheitspunkte liegende Schwächezonen umschlossen, wodurch sich die gesamte Stabilität der Sicherheitseinrichtung verändern lässt.

Die DE 199 06 120 A1 beschreibt eine Schlaufenvorrichtung, die es ermöglicht, die Größe einer Seilschlaufe stufenlos zu verstellen. Dazu ist ein Seilende mit einem Knoten an einer Öse befestigt, während das Seil als Schlaufe über ein Klemmteil weitergeführt ist. Mit Hilfe des Klemmteils kann die Länge der Schlaufe stufenlos eingestellt werden.

Aus der DE 231 267 A1 sind Endabschlüsse, Litzen und Seile bekannt. Der Endabschluss ist dabei auf ein Drahtseil aufgepresst oder aufgeschrumpft und greift in das Seil ein. Der Endabschluss weist einen Kragen mit wenigstens einer Lagerfläche auf, mit deren Hilfe das Seilende an einem Gegenstück befestigt werden kann.

Die JP 612 668 14 A offenbart eine Seilendverbindung, bei der das Ende eines Seils an einem Arm schwenkbar angeordnet werden kann. Die Anordnung erfolgt über ein Verbindungsstück, das einen Schlitz und eine Aussparung aufweist, in die eine Verdickung des Endes des Seils einführbar ist, die den Schlitz hintergreift.

Aus der US 1,807,314 ist ein Kabelverbinder bekannt, an dem ein Kabelende befestigt werden kann und der mittels eines Auges an einem Stift befestigt werden kann.

Aus der US 1,461,498 ist ein Befestigungsmittel für ein Seilende an einem Stab bekannt, das einen an einer Führung schwenkbar angeordneten Haken aufweist.

Nachteilig an den aus dem Stand der Technik bekannten Seilendverbindungen ist insbesondere, dass sich der Knoten des Seilendabschnitts nach Belastung schwer wieder lösen lässt.

Es ist Aufgabe der vorliegenden Erfindung, ein Verbindungsmittel für ein längliches biegeschlaffes Element zur Verfügung zu stellen, an dem ein Endabschnitt des Elementes sicher verknotet werden kann und das dennoch ein leichtes Lösen eines Knotens ermöglicht.

Die Aufgabe wird durch ein Verbindungsmittel mit den Merkmalen des Anspruchs 1 gelöst.

Das erfindungsgemäße Verbindungsmittel für und mit einem länglichen biegeschlaffen Element zeichnet sich durch seine Einfachheit und dennoch vorhandene Sicherheit aus. Das Verbindungsmittel umfasst eine Führung mit einem Führungseingang und einem Führungsausgang zum Durchziehen eines Endabschnittes des länglichen biegeschlaffen Elementes in Durchziehrichtung. An dem Führungsausgang ist ein länglicher Pin angeordnet mit einer in Durchziehrichtung ausgerichteten Pin-Längsrichtung. Der Pin kann als ein Vollprofil, aber auch als Hohlprofil ausgebildet sein.

Das Verbindungsmittel kann in verschiedenen Bereichen eingesetzt werden, wie dem Segelbereich, dem Kletterbereich u.a.

Das längliche biegeschlaffe Element ist auf zwei Weisen vor dem Lösen vom Verbindungsmittel gesichert. Der Pin weist einen freien Abschnitt auf, an dem der Endabschnitt festgeknotet ist. Der am freien Abschnitt des Pins festgeknotete Endabschnitt des länglichen biegeschlaffen Elementes ist gegen Durchrutschen entgegen der Durchziehrichtung aus der Führung somit gesichert.

Vorzugsweise ist der Durchmesser der Führung kleiner als ein Knotendurchmesser gewählt. Dadurch rutscht der vom Pin zufällig abgezogene Knoten dennoch nicht durch die Führung hindurch.

Unter einem länglichen biegeschlaffen Element werden Seile, Gurte, Bänder usw. verstanden.

Zum einen ist der Endabschnitt durch die Verknotung am freien Abschnitt des Pins gegen Herausrutschen gesichert, zum anderen ist der Knoten nach Belastung besonders leicht wieder lösbar, da er um den Pin herum geknotet ist. Der Knoten kann nach dem Gebrauch des Verbindungsmittels vom Pin heruntergezogen werden, und durch den sich durch das Herausziehen des Pins ergebenden Freiraum innerhalb des Knotens lässt sich der Knoten besonders leicht wieder lösen.

Vorzugsweise ist an dem Verbindungsmittel wenigstens ein Befestigungsmittel angeordnet, mit dem das Verbindungsmittel an einer Vorrichtung befestigt werden kann. Das Verbindungsmittel kann beispielsweise an einem Klettergurt, Klettergeschirr, einer Steigklemme oder einem Karabiner befestigt, integriert oder angeordnet sein. Die Verbindung zwischen Verbindungsmittel und der Vorrichtung ist vorzugsweise lösbar und weist einen Sicherungsmechanismus auf, der gegen selbsttätiges Lösen sichert.

Das Befestigungsmittel kann direkt an der Führung oder am Pin vorgesehen sein.

Die Verbindung kann durch ein als Einschubteil ausgebildetes Befestigungsmittel und eine an der Vorrichtung angeordnete Einschubvorrichtung für das Einschubteil ausgebildet sein. Das Einschubteil ist vorzugsweise als quaderförmige Metallplatte ausgebildet.

Günstigerweise umfasst das Befestigungsmittel einen Einklinkmechanismus. Die Begriffe Einklinkmechanismus sowie Einklinken werden hier und im Weiteren weit verstanden. Es sind davon auch Steck- und Klickmechanismen u. Ä. umfasst.

Wenn das Befestigungsmittel am Pin vorgesehen ist, kann es als Einklinkmechanismus an der Spitze des Pins ausgebildet sein.

Günstigerweise umfasst die Führung einen Rohrabschnitt. Der Rohrabschnitt weist einen Rohreingang und einen Rohrausgang auf. Durch den Rohreingang ist der Endabschnitt des Elementes in den Rohrabschnitt einführbar und aus dem Rohrausgang herausziehbar. Der Rohrabschnitt ist in Durchziehrichtung durchgängig hohl ausgebildet.

In einer besonders bevorzugten Ausführungsform der Erfindung ist der Pin außen am Rohrabschnitt befestigt, vorzugsweise festgeschweißt oder gelötet, und die Längsrichtung des Pins ist im Wesentlichen parallel zur Längsrichtung des Rohrabschnitts ausgerichtet. Es ist jedoch auch denkbar, dass das freie Ende des Pins in einem Winkel zur Durchziehrichtung angeordnet ist oder dass das freie Ende gekrümmt ist und sich vorzugsweise vom Führungsausgang wegkrümmt.

In einer Weiterbildung der Erfindung ist wenigstens eine weitere Führung an der einen Führung vorgesehen, und die wenigstens eine weitere Führung ist auch unter Zug- und Druckbelastungen posistionsstabil gegenüber der einen Führung und an der einen Führung montiert. Die Führungen können vorzugsweise miteinander verschweißt oder verlötet sein. Es ist jedoch auch denkbar, dass die Führungen über Steckmechanismen miteinander lösbar verbunden sind. Die weitere Führung kann auch einen weiteren an ihr angeordneten Pin aufweisen. Der Pin und der weitere Pin können in gleicher oder auch entgegengesetzter Richtung von dem Verbindungsmittel abstehen.

Günstigerweise ist das Befestigungsmittel als Halteplatte ausgebildet, und die Führungen sind an der Halteplatte ebenfalls unter Zug- und Druckbelastung positionsstabil befestigt.

In einer besonders sicheren Form des Verbindungsmittels ist am freien Ende des Pins ein Sicherheitsmittel vorgesehen. Das Sicherheitsmittel ist vorzugsweise als schwenkbarer Sicherheitsarm ausgebildet, der nach dem Verknoten des Endabschnitts am freien Abschnitt des Pins verschränkbar ist, so dass eine Längsrichtung des Sicherheitsarms im Wesentlichen quer, vorzugsweise senkrecht zur Längsrichtung des Pins angeordnet ist. Es ist aber auch denkbar, das Sicherheitsmittel als in den Pin einsteckbaren Stift oder Schraube auszubilden

Die Erfindung wird anhand von acht Ausführungsbeispielen in zwölf Figuren beschrieben.

### Dabei zeigen

- Fig. 1: eine erste Ausführungsform einer Seilendverbindung mit einer Seilführung,
- Fig. 2: die erste Ausführungsform gemäß Fig. 1 mit angeknotetem Seilendabschnitt,
- Fig. 3: die Seilendverbindung gemäß Fig. 1 mit Schiebehalterung an einem Gürtel,
- Fig. 4: eine Seilendverbindung in einer zweiten Ausführungsform mit vier Seilführungen,
- Fig. 5a: eine erfindungsgemäße Augverbindung für einen Baumstamm,
- Fig. 5b: eine erfindungsgemäße Endlosverbindung für zwei Baumstämme,
- Fig. 6: eine erfindungsgemäße Gurtendverbindung,
- Fig. 7: einen erfindungsgemäßen Wurfhaken,
- Fig. 8: eine erfindungsgemäße Seilklemme mit integrierter Seilendverbindung,
- Fig. 9: einen erfindungsgemäßen Karabiner mit integrierter Seilendverbindung,
- Fig. 10: eine zweifache Seilendverbindung.

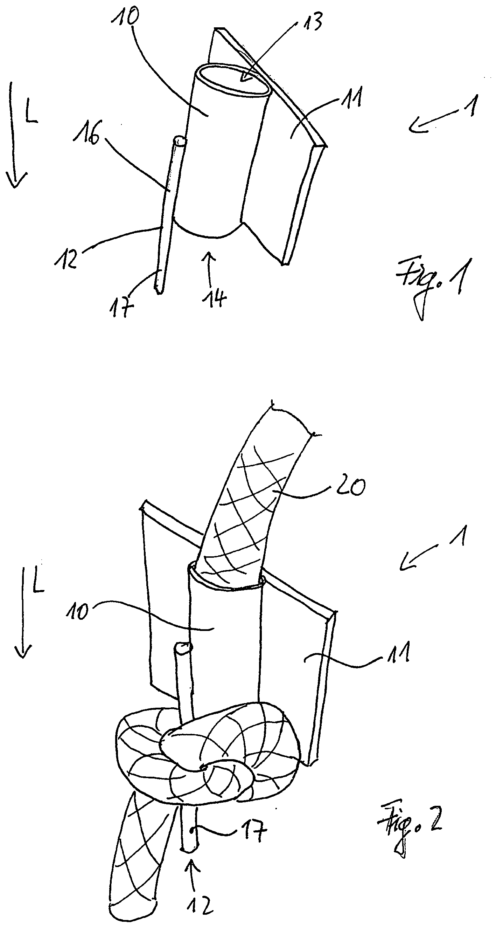

Die in Fig. 1 dargestellte Seilendverbindung 1 weist eine als Rohrabschnitt 10 ausgebildete Seilführung auf. Der Rohrabschnitt 10 weist einen gleichbleibenden Querschnitt entlang seiner Längsrichtung L auf. Sowohl ein Innen- als auch ein Außendurchmesser des Rohrabschnitts 10 sind entlang der Längsrichtung L über seine gesamte Längsausdehnung konstant. Der Rohrabschnitt 10 ist hier aus Metall ausgebildet. Es können für den Rohrabschnitt und andere Bauteile der Seilendverbindungen auch andere Materialien wie feste Kunststoffe u. Ä. verwendet werden.

An der Seilendverbindung 1 ist entlang einer Außenseite des Rohrabschnitts 10 ein vorzugsweise als quaderförmige, flache Metallplatte 11 ausgebildetes Befestigungsmittel auch unter Druck- und Zugebelastung positionsfest befestigt, vorzugsweise angeschweißt. An einer der Metallplatte 11 gegenüberliegenden Außenseite des Rohrabschnitts 10 ist ein ebenfalls in Längsrichtung L ausgerichteter länglicher Pin 12 befestigt. Der Pin 12 ist als ein längliches Vollprofil, vorzugsweise als ein stabförmiger Vollmetallstift ausgebildet. Der Pin 12 ist hier außenseitig auf den Rohrabschnitt 10 aufgeschweißt. Die durch die Längsausdehnung des Pins 12 definierte Längsrichtung L des Pins 12 verläuft parallel zur Längsrichtung L des Rohrabschnitts 10.

Der Rohrabschnitt 10 weist einen Rohrabschnitt-Eingang 13 und einen Rohrabschnitt-Ausgang 14 auf. Der Rohrabschnitt-Eingang 13 ist in Fig. 1 oben, der Rohrabschnitt-Ausgang 14 ist in Fig. 1 unten am Rohrabschnitt 10 in Fig. 1 vorgesehen. Durch den Rohrabschnitt 10 kann über den Rohrabschnitt-Eingang 13 ein Seilendabschnitt 20 durch den Rohrabschnitt 10 innen hindurch und aus dem Rohrabschnitt-Ausgang 14 heraus gezogen werden. Die Durchziehrichtung des Seilendabschnitts 20 verläuft in Längsrichtung L.

Der Pin 12 kann konisch ausgebildet sein, wobei die Konusspitze vom Rohrabschnitt-Ausgang 14 weg gerichtet ist. Dadurch wird das Abziehen des belasteten Knotens erleichtert.

Der Pin 12 ist mit einem Befestigungsabschnitt 16 fest mit dem Rohrabschnitt 10 verschweißt und ein ihm benachbarter freier Abschnitt 17 steht über den Rohrabschnitt-Ausgang hinaus um eine Länge des freien Abschnitts 17 ab. Der freie Abschnitt 17 steht weggerichtet vom Rohrabschnitt-Ausgang 14 vom Rohrabschnitt 10 ab. Er ist entlang einer Flächennormalen eines Öffnungsquerschnitts des Rohrabschnitt-Ausgangs 14 ausgerichtet.

Die Längsrichtung L des Pins 12, die Durchziehrichtung des Seilendabschnitts 20 und die Längsrichtung L des Rohrabschnitts 10 sind bei der Seilendverbindung gemäß Fig. 1 parallel zueinander ausgerichtet. Sowohl Pin 12 als auch Metallplatte 11 sind unter Zug- und Druckbelastungen positionsfest mit dem Rohrabschnitt 10 verbunden. Die Seilendverbindung sollte eine bestimmte Last im Kletterbereich von mindestens 1,5 t tragen können, um geforderten Bruchlasten des jeweiligen Anwendungsbereiches zu genügen.

In Fig. 2 ist die Seilendverbindung mit durch den Rohrabschnitt 10 hindurchgezogenem Seilendabschnitt 20 dargestellt. Der durchgezogene Seilendabschnitt 20 ist in Durchziehrichtung dem Rohrabschnitt-Ausgang 14 nachlaufend um den freien Abschnitt 17 des Pins 12 herum geknotet.

Der Seilendabschnitt 20 ist auf die in Fig. 2 dargestellte Weise sicher mit der Seilendverbindung verbunden und gegen ein Herausrutschen durch den Rohrabschnitt 10 entgegen der Durchziehrichtung gesichert.

Zum einen kann der Seilendabschnitt 20 nicht aus der Seilendverbindung herausrutschen, weil der Seilendabschnitt 20 über dem freien Abschnitt 17 des Pins 12 verknotet ist, zum anderen würde der Seilendabschnitt, selbst wenn der Knoten vom Pin 12 herunterrutschen würde, nicht durch den Rohrabschnitt 10 durchrutschen können, weil der Knoten das Herausrutschen durch den Rohrabschnitt 10 entgegen der Durchziehrichtung sicher verhindern würde. Dazu ist der Durchmesser des Seilendabschnitts 20 dem Innendurchmesser des Rohrabschnitts 10 angepasst. Der Rohrabschnitt 10 weist einen entlang der gesamten Längsrichtung gleichbleibenden kreisförmigen freien Innenquerschnitt mit gleichbleibendem Innendurchmesser auf.

Vorzugsweise sind die Wandungen des Rohrabschnitts 10 in Längsrichtung L und entlang dem Umfang von im Wesentlichen gleichbleibender Dicke ausgeformt.

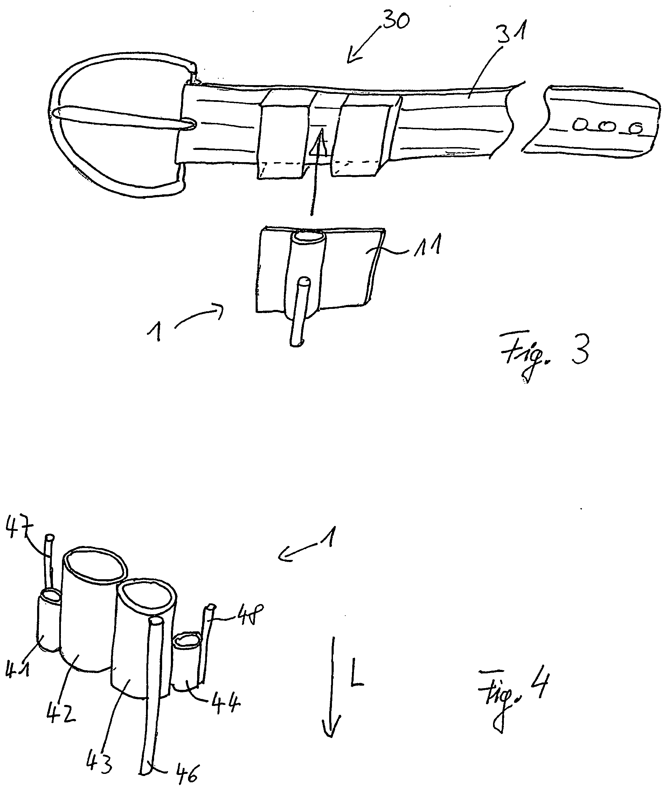

Fig. 3 zeigt die Seilendverbindung 1 der Figuren 1 und 2 in einem Zusammenwirken mit einer fest mit einem Klettergurt 31 vernähten Einsteckvorrichtung 30. Die in Fig. 1 und Fig. 2 gezeigte Seilendverbindung 1 eignet sich insbesondere als Teil eines Klettergurtes. Ein derartiger Klettergurt kann beim Bergsteigen, insbesondere auch beim Baumklettern im Rahmen der Baumpflege verwendet werden. Die Einsteckvorrichtung 30 ist zur Aufnahme der Metallplatte 11 der Seilendverbindung 1 dimensioniert. Die Einsteckvorrichtung 30 ist, bezogen auf die Position, in der der Träger des Klettergurtes 31 den Gurt um seinen Bauch geschnallt hat, zu dessen Füßen hin offen und zu dessen Kopf hin verschlossen. Die Seilendverbindung kann daher aus Richtung der Füße des Trägers zum Kopf hin in die Einsteckvorrichtung 30 eingesteckt werden. Die Seilendverbindung 1 ist mit einem (nicht eingezeichneten) Arretiermechanismus in der Einsteckvorrichtung gegen ein Herausrutschen gesichert.

Fig. 4 zeigt eine zweite Ausführungsform der erfindungsgemäßen Seilendverbindung 1. Dort sind vier Rohrabschnitte 41, 42, 43, 44 positionsfest auch unter Zug- und Druckbelastung miteinander verbunden, vorzugsweise verschweißt. Zwei mittlere Rohrabschnitte 42, 43 weisen eine längere gleiche Längsausdehnung in Längsrichtung L auf, während zwei äußere Rohrabschnitte 41, 44 kürzer als die beiden mittleren längeren Rohrabschnitte 42, 43 ausgebildet sind.

Einer der beiden mittleren Rohrabschnitte 42 weist keinen Pin, der andere mittlere Rohrabschnitt 43 weist einen längeren Pin 46 auf. Die beiden äußeren kürzeren Rohrabschnitte 41, 44 weisen jeweils einen kürzeren Pin 47, 48 auf.

Der längere Pin 46 und die beiden kürzeren Pins 47, 48 stehen in entgegengesetzter Richtung von der Seilendverbindung 1 ab. Die Seilendverbindung 1 in Fig. 4 ist dazu bestimmt, den Seilendabschnitt 20 durch den mittleren längeren Rohrabschnitt 43 mit Pin 46 von oben nach unten durch die Seilendverbindung 1 hindurchzuziehen, während die beiden kürzeren äußeren Rohrabschnitte 41, 44 dazu bestimmt sind, andere Seilendabschnitte in Fig. 4 von unten nach oben durchzuziehen. Die Seilendabschnitte jeder der drei Seile können an dem jeweiligen Pin 46, 47, 48, der an dem jeweiligen Rohrabschnitt-Ausgang vorgesehen ist, mit dem jeweils zugehörigen freien Abschnitt der Pins 46, 47, 48 sicher verknotet werden.

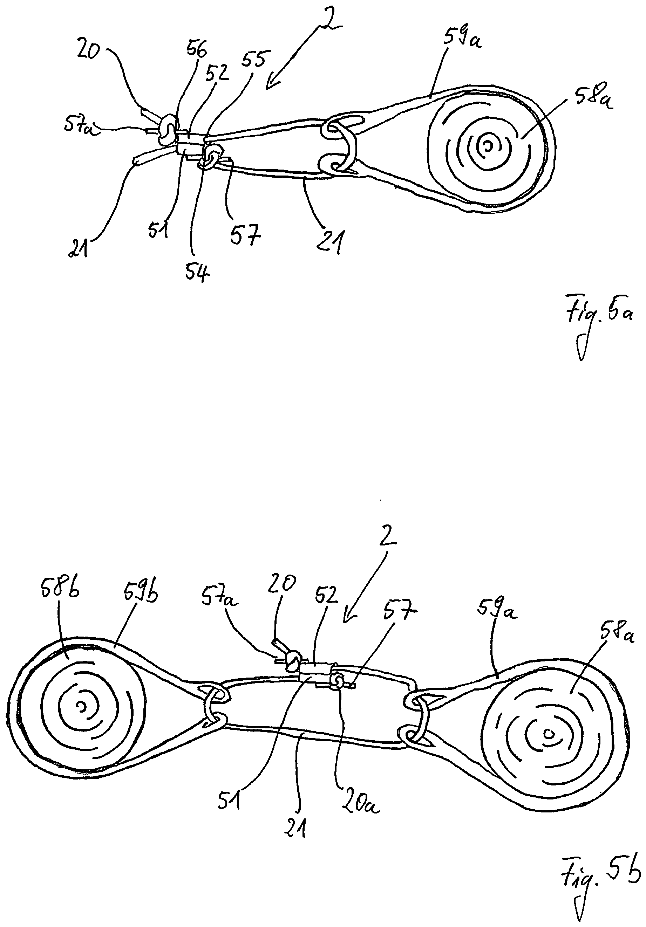

Fig. 5a zeigt eine erfindungsgemäße gegenläufige doppelte Seilendverbindung 2 mit zwei parallel zueinander gegenläufig angeordneten Rohrabschnitten 51, 52 mit jeweils einem Rohrabschnitt-Eingang 53, 55 und einem Rohrabschnitt-Ausgang 54, 56, an dem jeweils ein Pin 57, 57a auch unter Zug- und Druckbelastung positionsfest angeordnet ist. Die gegenläufige doppelte Seilendverbindung 2 wird in Fig. 5a zur Ausbildung einer Augverbindung und in Fig. 5b zur Ausbildung einer Endlosverbindung verwendet.

Zunächst ist in Fig. 5a eine erst Anwendungsform der doppelten Seilendverbindung 2 dargestellt, bei der eine Schlinge 59a mit zwei Endschlaufen um einen Stämmling 58a gelegt ist. Durch beide nebeneinander angeordnete Endschlaufen der einen Schlinge 59a ist ein Seil 21 geführt. Das Seil 21 ist an einem von seinem Seilendabschnitt 20 beabstandeten Abschnitt durch den ersten Rohrabschnitt 51 und an dem zugordneten Rohrabschnitt-Ausgang 54 an dem zugeordneten Pin 57 verknotet und im weiteren Verlauf in Richtung des Seilendabschnitts 20 durch die beiden Schlaufen der einen Schlinge 59a hindurchgeführt. Der Seilendabschnitt 20 ist dann durch den zweiten Rohrabschnitt 52 gegenläufig zum ersten Rohrabschnitt 51 geführt ist und an dem zugeordneten Rohrabschnitt-Ausgang 56 an den zugeordneten Pin 57a geknotet. Die in Fig. 5a dargestellte Anordnung wird auch als Augverbindung bezeichnet. Die in Fig. 5a vorgesehene doppelte Seilendverbindung 2 dient im Baumpflegebereich insbesondere zur Kronensicherung. In der Stabilität aufgrund von beispielsweise starken Winden geschädigte Baumkronen können mit dieser doppelten Seilendverbindung 2 gesichert werden. Das in Fig. 5a links offen gelassene Ende des Seils 21 ist dazu beispielsweise mit einem Erdanker verbunden.

Fig. 5b zeigt eine zweite Anwendungsform der gegenläufigen doppelten Seilendverbindung 2 der Fig. 5a. Dabei wird im Gegensatz zur Fig. 5a keine Augverbindung, sondern eine Endlosverbindung zwischen zwei Stämmlingen 58a, 58b ausgebildet. Fig. 5b zeigt zunächst, wie in Fig. 5a, einen von einer mit zwei Endschlaufen versehenen ersten Schlinge 59a gehaltenen ersten Stämmling 58a sowie einen zweiten von einer zweiten, zur ersten im Wesentlichen baugleichen, ebenfalls mit zwei Schlaufen versehenen zweiten Schlinge 59b gehaltenen Stämmling 58b. Im Gegensatz zu Fig. 5a ist das Seil mit seinen beiden Endabschnitten 20, 20a durch den jeweiligen Rohrabschnitt 51, 52 der gegenläufig verlaufenden doppelten Seilendverbindung 2 geführt und bildet dadurch eine Endlosverbindung aus.

Der Seilendabschnitt 20 ist durch den zweiten Rohrabschnitt 52 geführt und an dem zugeordneten Pin 58 verknotet, der andere Seilendabschnitt 20a ist durch den ersten Rohrabschnitt 51 geführt und an dem zugeordneten Pin 57 verknotet.

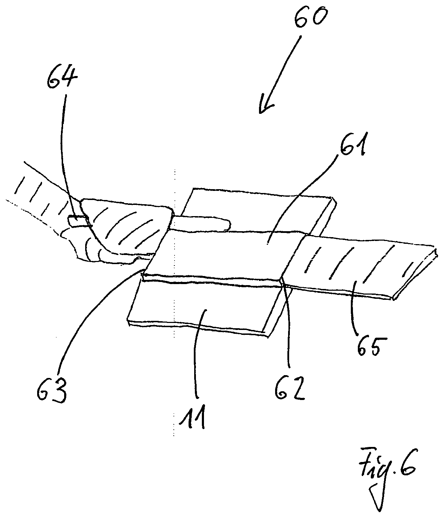

Fig. 6 zeigt eine Gurtendverbindung 60, die sehr ähnlich zur Seilendverbindung 1 ausgebildet ist. Die Gurtendverbindung 60 weist eine Gurtführung 61 mit einem im Querschnitt senkrecht zur Gurtlängsrichtung rechteckigen Öffnungsquerschnitt auf, an dessen größerer Außenseite eine Metallplatte 11 positionsfest angeordnet ist. Die Metallplatte 11 kann an einem Gegenstück eingehakt werden. Die im Querschnitt rechteckige Gurtführung 61 weist ebenfalls einen Gurtführungseingang 62 sowie einen Gurtführungsausgang 63 auf und einen am Gurtführungsausgang 63 angeordneten, von ihm wegweisenden Pin 64. An diesem wird ein Gurtendabschnitt 65 verknotet.

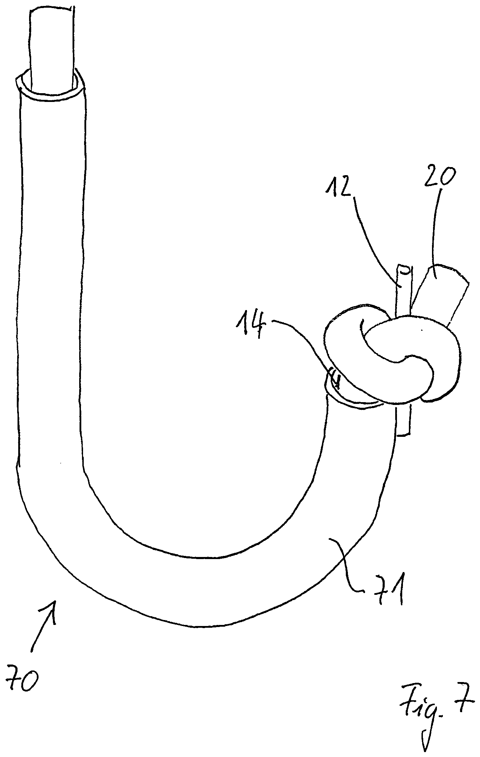

In Fig. 7 ist ein Wurfhaken 70 dargestellt mit einem gekrümmten, im Vergleich zu Fig. 1 länger ausgebildeten Rohrabschnitt 71, durch den ein Seilendabschnitt 20 geführt ist, der an einem am Rohrabschnitt-Ausgang 14 vorgesehenen Pin 12 verknotet wird. Der in Fig. 7 dargestellte Wurfhaken 70 kann ebenfalls im Bereich der Baumpflege verwendet werden.

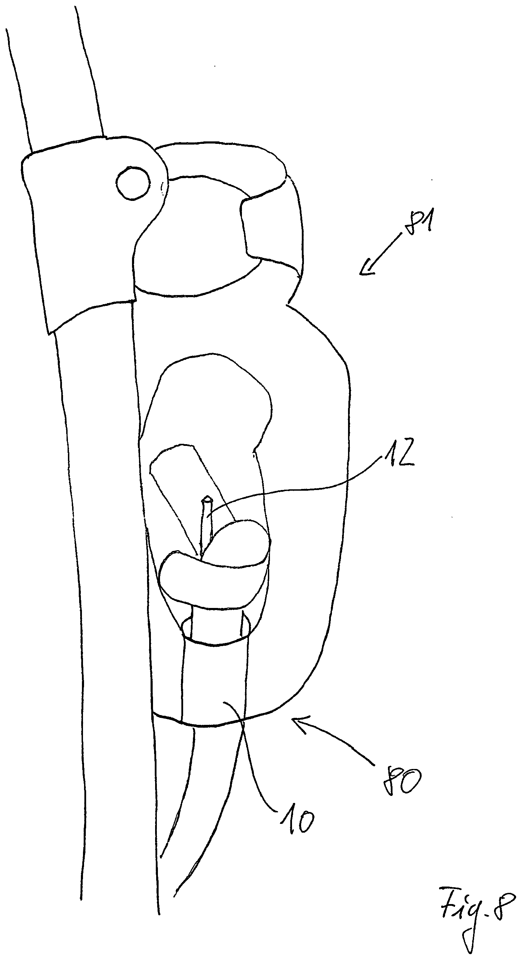

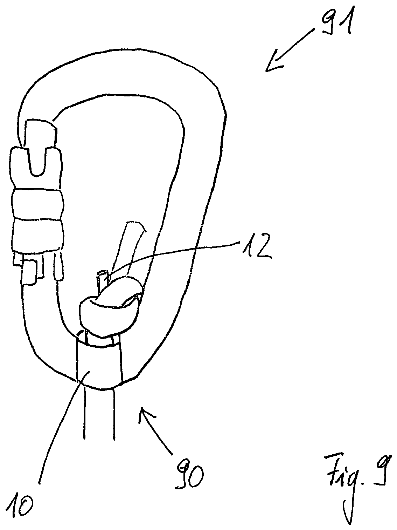

In Fig. 8 und Fig. 9 sind Seilendverbindungen 80, 90 beschrieben, die in eine Vorrichtung integriert sind. In Fig. 8 ist die Seilendverbindung 80 in den Griff einer Seilklemme 81 integriert und in Fig. 9 in einen Karabinerbügel 91. Der Pin 12 ist dabei in beiden Fällen innerhalb des vom Material umlaufenden Auges angeordnet, und der Rohrabschnitt 10 ist quer durch das Material hindurchgeführt.

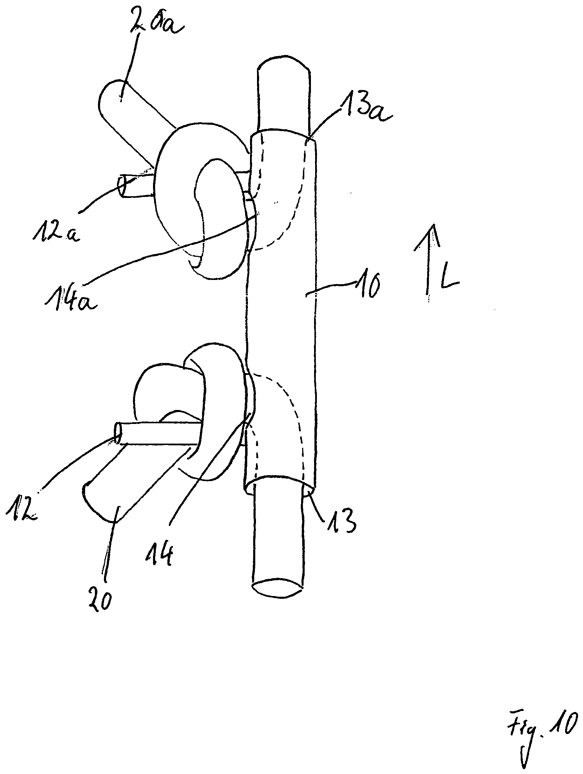

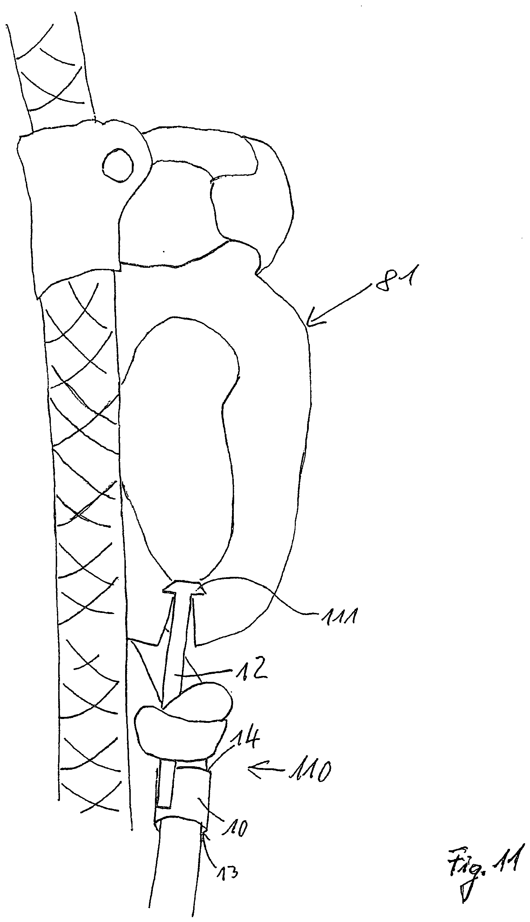

Die in Fig. 10 dargestellte doppelte Seilendverbindung 2 umfasst einen Rohrabschnitt 10 mit in Rohrlängsrichtung L an den beiden Rohrenden vorgesehenen zwei Rohrabschnitt-Eingängen 13, 13a. In der Wandung des Rohrabschnitts 10 sind zwei Öffnungen eingebracht, die als Rohrabschnitt-Ausgänge 14, 14a ausgebildet sind. Neben jedem der Rohrabschnitt-Ausgänge ist jeweils ein Pin 12, 12a befestigt, an dem jeweils ein Seilabschnittsende 20, 20a festgeknotet ist. Die beiden Seilabschnittsenden 20, 20a können demselben Seil oder verschiedenen Seilen zugeordnet sein. Die Pin-Längsrichtung L und die Längsrichtung des Rohrabschnitts 10 stehen quer, vorzugsweise senkrecht zueinander.

### Bezugszeichenliste

- 1: Seilendverbindung
- 2: Doppelte Seilendverbindung
- 10: Rohrabschnitt
- 11: Metallplatte
- 12: Pin
- 12a: Pin
- 13: Rohrabschnitt-Eingang
- 13a: Rohrabschnitt-Eingang
- 14: Rohrabschnitt-Ausgang
- 14a: Rohrabschnitt-Ausgang
- 16: Befestigungsabschnitt
- 17: freier (End-)Abschnitt
- 20: Seilendabschnitt
- 20a: anderer Seilendabschnitt
- 21: Seil
- 30: Einsteckvorrichtung
- 31: Klettergurt
- 41: kürzerer äußerer Rohrabschnitt
- 42: mittlerer längerer Rohrabschnitt
- 43: mittlerer längerer Rohrabschnitt
- 44: kürzerer äußerer Rohrabschnitt
- 46: längerer Pin
- 47: kürzerer Pin
- 48: kürzerer Pin
- 51: erster Rohrabschnitt
- 52: zweiter Rohrabschnitt
- 53: erster Rohrabschnitt-Eingang
- 54: erster Rohrabschnitt-Ausgang
- 55: zweiter Rohrabschnitt-Eingang
- 56: zweiter Rohrabschnitt-Ausgang
- 57: Pin
- 57a: Pin
- 58: Stämmling
- 58b: Stämmling
- 59a: Schlinge
- 59b: Schlinge
- 60: Gurtendverbindung
- 61: Gurtführung
- 62: Gurtführungseingang
- 63: Gurtführungsausgang
- 64: Pin
- 65: Gurt
- 70: Wurfhaken
- 71: längerer Rohrabschnitt
- 80: Seilendverbindung
- 81: Seilklemme
- 90: Seilendverbindung
- 91: Karabiner

- L: = Längsrichtung

## Patentansprüche

1. Verbindungsmittel mit
einem länglichen biegeschlaffen Element und mit
einer Führung (10, 51, 52, 61) mit einem Führungseingang (13, 53, 55, 62) und einem Führungsausgang (14, 54, 56, 63) durch den ein Elementabschnitt (20, 65) des länglichen biegeschlaffen Elements in einer Durchziehrichtung durchgezogen ist, mit einem am Führungsausgang (14, 54, 56, 63) angeordneten länglichen Pin (12, 46, 47, 48, 57, 57a, 64) mit einer in Durchziehrichtung ausgerichteten Pin-Längsrichtung (L) und mit einem freien Abschnitt (17), an dem ein Endabschnitt des Elementabschnitts (20, 65) festgeknotet ist und so gegen Durchrutschen entgegen der Durchziehrichtung aus der Führung (10, 51, 52, 61) gesichert ist,
**dadurch gekennzeichnet, dass** der Pin (12, 46, 47, 48, 57, 57a, 64) als ein stabförmiges Hohl- oder Vollprofil ausgebildet ist und wobei der Pin (12, 46, 47, 48, 57, 57a, 64) auch unter Druck- und Zugbelastungen positionsfest mit der Führung (10, 51, 52, 61) verbunden ist und dass der Knoten nach einem Gebrauch des Verbindungsmittels vom Pin (12, 46, 47, 48, 57, 57a, 64) abziehbar ist und dadurch, dass durch den sich durch das Herausziehen des Pins (12, 46, 47, 48, 57, 57a, 64) ergebenden Freiraum innerhalb des Knotens der Knoten besonders leicht lösbar ist.

2. Verbindungsmittel nach Anspruch 1,
**gekennzeichnet durch** wenigstens ein an der Führung (10, 51, 52, 61) oder dem Pin (12, 46, 47, 48, 57, 57a, 64) angeordnetes Befestigungsmittel (11).

3. Verbindungsmittel nach Anspruch 2,
**dadurch gekennzeichnet, dass** das Befestigungsmittel (11) einen Einklinkmechanismus umfasst.

4. Verbindungsmittel nach Anspruch 1, 2 oder 3,
**dadurch gekennzeichnet, dass** die Führung (10, 51, 52, 61) einen Rohrabschnitt mit einem Rohreingang (13, 53, 55, 62) und einem Rohrausgang (14, 54, 56, 63) aufweist.

5. Verbindungsmittel nach Anspruch 4,
**dadurch gekennzeichnet, dass** der Pin (12, 46, 47, 48, 57, 57a, 64) außen am Rohrabschnitt (10, 51, 52, 61) befestigt ist und die Pin-Längsrichtung (L) entlang der Durchziehrichtung ausgerichtet ist.

6. Verbindungsmittel nach wenigstens einem der Ansprüche 1 bis 5,
**dadurch gekennzeichnet, dass** wenigstens eine weitere Führung (41, 42, 44) gleichgerichtet zur einen Führung (10, 43) und auch unter Zug- und Druckbelastung positionsstabil gegenüber der einen Führung (10, 43) vorgesehen ist.

7. Verbindungsmittel nach wenigstens einem der Ansprüche 1 bis 6,
**dadurch gekennzeichnet, dass** die Führung (10, 51, 52, 61) an einer Halteplatte (11) unter Zug- und Druckbelastung positionsstabil befestigt ist.

8. Verbindungsmittel nach wenigstens einem der Ansprüche 1 bis 7,
**dadurch gekennzeichnet, dass** am freien Abschnitt (17) des Pins (12, 46, 47, 48, 57, 57a, 64) ein Sicherheitsmittel gegen ein Abrutschen des Knotens vorgesehen ist.

9. Verbindungsmittel nach wenigstens einem der Ansprüche 1 bis 8,
**dadurch gekennzeichnet, dass** die Führung (10, 43) einen Mechanismus zum lösbaren Befestigen der wenigstens einen weiteren Führung (41, 42, 44) aufweist.

10. Verbindungsmittel nach wenigstens einem der Ansprüche 1 bis 9,
**dadurch gekennzeichnet, dass** eine erste Mehrzahl an Führungen (41, 42, 43, 44) vorgesehen ist, die im Wesentlichen parallel nebeneinander angeordnet sind und eine zweite Mehrzahl an Pins (46, 47, 48) vorgesehen ist.

11. Verbindungsmittel nach Anspruch 10,
**dadurch gekennzeichnet, dass** mindestens einer der Pins (46) in die entgegengesetzte Richtung der anderen Pins (47, 48) ausgerichtet ist.

## Claims

1. Connecting means with
an elongate flexible element and with
a guide (10, 51, 52, 61) with a guide inlet (13, 53, 55, 62) and a guide outlet (14, 54, 56, 63) through which an element portion (20, 65) of the elongate flexible element is pulled through in a pull-through direction,
with an elongate pin (12, 46, 47, 48, 57, 57a, 64) being arranged on the guide outlet (14, 54, 56, 63), with a pin longitudinal direction (L) being aligned in the pull-through direction, and with a free portion (17) on which an end portion of the element portion (20, 65) is tightly knotted and thus is secured against slipping through out of the guide (10, 51, 52, 61) counter to the pull-through direction,
**characterised in that** the pin (12, 46, 47, 48, 57, 57a, 64) is constructed as a rod-shaped hollow or solid profile, and wherein the pin (12, 46, 47, 48, 57, 57a, 64) is also connected under compressive and tensile loading in a fixed position to the guide (10, 51, 52, 61), and that after use of the connecting means the knot can be pulled off from the pin (12, 46, 47, 48, 57, 57a, 64), and **in that** the knot is releasable particularly easily due to the free space produced inside the knot by the pulling out of the pin (12, 46, 47, 48, 57, 57a, 64).

2. Connecting means according to claim 1,
**characterised by** at least one fastening means (11) arranged on the guide (10, 51, 52, 61) or the pin (12, 46, 47, 48, 57, 57a, 64).

3. Connecting means according to claim 2,
**characterised in that** the fastening means (11) comprises a latching mechanism.

4. Connecting means according to claim 1, 2 or 3,
**characterised in that** the guide (10, 51, 52, 61) has a tube portion with a tube inlet (13, 53, 55, 62) and a tube outlet (14, 54, 56, 63).

5. Connecting means according to claim 4,
**characterised in that** the pin (12, 46, 47, 48, 57, 57a, 64) is fastened externally on the tube portion (10, 51, 52, 61) and the pin longitudinal direction (L) is oriented along the pull-through direction.

6. Connecting means according to at least one of claims 1 to 5,
**characterised in that** at least one further guide (41, 42, 44) is oriented in the same direction as the one guide (10, 43) and also under tensile and compressive loading is provided in a stable position relative to the one guide (10,43).

7. Connecting means according to at least one of claims 1 to 6,
**characterised in that** the guide (10, 51, 52, 61) is fastened to a retaining plate (11) in a stable position under tensile and compressive load.

8. Connecting means according to at least one of claims 1 to 7,
**characterised in that** a securing means against slipping off of the knot is provided on the free portion (17) of the pin (12, 46, 47, 48, 57, 57a, 64).

9. Connecting means according to at least one of claims 1 to 8,
**characterised in that** the guide (10, 43) has a mechanism for releasable fastening of the at least one further guide (41, 42, 44).

10. Connecting means according to at least one of claims 1 to 9,
**characterised in that** a first plurality of guides (41, 42, 43, 44) is provided which are arranged substantially parallel to one another, and a second plurality of pins (46, 47, 48) is provided.

11. Connecting means according to claim 10,
**characterised in that** at least one of the pins (46) is oriented in the opposite direction to the other pins (47, 48).

## Revendications

1. Moyen de liaison avec
un élément allongé souple en flexion et avec
un guidage (10, 51, 52, 61) avec une entrée de guidage (13, 53, 55, 62) et une sortie de guidage (14, 54, 56, 63) par laquelle un tronçon d'élément (20, 65) de l'élément allongé souple en flexion est tiré dans un sens de tirage,
avec une broche allongée (12, 46, 47, 48, 57, 57a, 64) placée à la sortie de guidage (14, 54, 56, 63) avec un sens longitudinal de la broche (L) orientée dans le sens de tirage et avec un tronçon libre (17) sur lequel un tronçon d'extrémité du tronçon d'élément (20, 65) est noué et est ainsi bloqué contre le glissement à l'encontre du sens de tirage hors du guidage (10, 51, 52, 61),
**caractérisé en ce que** la broche (12, 46, 47, 48, 57, 57a, 64) est configurée comme un profilé creux ou plein en forme de baguette, la broche (12, 46, 47, 48, 57, 57a, 64) étant reliée au guidage 10, 51, 52, 61) en position fixe même dans des conditions de pression et de tension et que le noeud peut être détaché de la broche (12, 46, 47, 48, 57, 57a, 64) après une utilisation et **en ce que** le noeud peut être dénoué particulièrement facilement par l'espace libre qui résulte du tirage de la broche (12, 46, 47, 48, 57, 57a, 64) à l'intérieur du noeud.

2. Moyen de liaison selon la revendication 1,
**caractérisé par** au moins un moyen de fixation (11) placé sur le guidage (10, 51, 52, 61) ou sur la broche (12, 46, 47, 48, 57, 57a, 64).

3. Moyen de liaison selon la revendication 2,
**caractérisé en ce que** le moyen de fixation (11) comprend un mécanisme d'encliquetage.

4. Moyen de liaison selon la revendication 1, 2 ou 3,
**caractérisé en ce que** le guidage (10, 51, 52, 61) présente un tronçon de tuyau avec une entrée de tuyau (13, 53, 55, 62) et une sortie de tuyau (14, 54, 56, 63).

5. Moyen de liaison selon la revendication 4,
**caractérisé en ce que** la broche (12, 46, 47, 48, 57, 57a, 64) est fixée à l'extérieur sur le tronçon de tuyau (10, 51, 52, 61) et que le sens longitudinal de la broche (L) est orienté le long du sens de tirage.

6. Moyen de liaison selon au moins l'une des revendications 1 à 5,
**caractérisé en ce qu'**il est prévu au moins un autre guidage (41, 42, 44) orienté dans le même sens que le guidage (10, 43) et qu'il est en position stable par rapport au guidage (10, 43) même s'il est sollicité par la traction et la pression.

7. Moyen de liaison selon au moins l'une des revendications 1 à 6,
**caractérisé en ce que** le guidage (10, 51, 52, 61) est fixé sur une plaque de support (11) en position stable s'il est sollicité par la traction et la pression.

8. Moyen de liaison selon au moins l'une des revendications 1 à 7,
**caractérisé en ce qu'**il est prévu un moyen de sécurité contre un glissement du noeud sur le tronçon libre (17) de la broche (12, 46, 47, 48, 57, 57a, 64).

9. Moyen de liaison selon au moins l'une des revendications 1 à 8,
**caractérisé en ce que** le guidage (10, 43) présente un mécanisme pour la fixation amovible de l'autre guidage qui existe au moins (41, 42, 44).

10. Moyen de liaison selon au moins l'une des revendications 1 à 9,
**caractérisé en ce qu'**il est prévu une première pluralité de guidages (41, 42, 43, 44) qui sont placés sensiblement parallèlement les uns à côté des autres et qu'il est prévu une seconde pluralité de broches (46, 47, 48).

11. Moyen de liaison selon la revendication 10,
**caractérisé en ce qu'**au moins l'une des broches (46) est orientée dans le sens opposé des autres broches (47, 48).
